# EUROPEAN PATENT SPECIFICATION

(11) **EP 2 805 580 B1**
(45) Date of publication and mention of the grant of the patent: **07.03.2018**
(21) Application number: 13706055.4
(22) Date of filing: 21.01.2013
(51) Int. Cl.: H05B 37/02, G01J 1/42, G01J 1/44, H05B 33/08

(54) **BATTERY-POWERED LIGHT LEVEL SENSING DEVICE**
BATTERIEBETRIEBENE LICHTPEGELERKENNUNGSVORRICHTUNG
DISPOSITIF DE DÉTECTION DE NIVEAU D'ÉCLAIREMENT ALIMENTÉ PAR PILE

(30) Priority: 20.01.2012 GB 201200999
(43) Date of publication of application: 26.11.2014
(73) Proprietor: CP Electronics Limited, London, Greater London NW10 7XR (GB)
(72) Inventor: MANS, Paul, London Greater London NW10 7XR (GB); MILNER, Merlin, London Greater London NW10 7XR (GB)
(74) Representative: HGF Limited
(86) International application number: PCT/GB2013/050133
(87) International publication number: WO 2013/108053

(56) References cited:
- EP-A2- 1 610 197
- WO-A2-2010/111256
- JP-A- 2005 175 816
- US-A- 5 675 487
- US-A1- 2009 261 736
- US-A1- 2009 302 782
- US-B1- 6 522 078

## Description

This invention relates to a battery-powered light level sensing device.

### BACKGROUND

Many modern buildings will have some form of dimmable artificial lighting. Generally these will employ a lighting control system to provide a dimming signal, the purpose of which is to dim the lights down when there is enough ambient or artificial light coming through the windows of the illuminated space. Conversely when there is too little ambient light the artificial lights will be brightened to provide the necessary level of illumination for occupiers. Furthermore the lighting control system can be used to turn off the lights completely at a certain ambient light level, for both dimming and non-dimming light fittings.

In order to perform these functions the lighting control system must have some way of measuring ambient light (lux) levels. There are several existing methods of achieving this. The most common method is to incorporate a photocell into a ceiling mounted device and measure the light level over the user's working plane. The ceiling mounted device may be just a photocell or may be combined with another function such as an occupancy sensor. The advantage of this method is that it measures both artificial and ambient light, in theory giving the user the exact light level that they require. The disadvantage of this method is that it measures a reflection of the light from the user's working area, because the sensor is facing downwards. Consequently, the measured light level is dependent on the reflectivity of any objects below the sensor.

A further known method of measuring light is to provide a roof-mounted external photocell. This will then give the actual external ambient light level measured without any disruption. However, the relationship between the light level in each area of a building and the external ambient light level will depend on a range of factors specific to each area, especially if the building has any form of blinds which will restrict daylight entering the building. This means that the accurate control of the lighting level in a particular room dependent on changes in the external ambient light level will be complex, if not impossible. Furthermore this method requires a building wide lighting control system, because the sensor is necessarily mounted away from the lights being controlled. WO 2010/111256A2 relates to a wireless battery-powered daylight sensor for measuring a total light intensity in a space. The daylight sensor is typically mounted to a ceiling in the space at a distance from the window. US2009/261736A1 relates to a solar charged or solar powered illuminating device which can be hung on a transparent outward surface having an optical sensor unit on a backlight surface for detecting the intensity of illumination at the hanging location. US 6522078B1 relates to a PIR sensor system with a remote controller that also includes a light sensor where the remote controller is provided at a window. US 5675487 A relates to an energy control system for a window having fenestration blinds where the angle of the blinds is adjustable based on the output of photovoltaic sensors positions proximate the respective exterior and interior sides of the blinds to control solar radiation entering the window.

The present invention, at least in the presently preferred embodiments, seeks to improve upon the controllability of the lighting level within an illuminated space in response to changes in the ambient light level entering the space through windows.

### BRIEF SUMMARY OF THE DISCLOSURE

In accordance with the present invention there is provided a battery-powered light level sensing device as claimed in claim 1.

Thus, in accordance with the invention the first light level sensor is simply attached to the glass of a window bounding a room, whereby the light level entering the room through the window can be measured directly and accurately. The dimming level of the lighting in the room can then be based on the measured light level by a lighting controller in wireless data communication with the sensing device via the wireless transmitter.

It is possible for the first light level sensor to be attached to the window glass with other components of the sensing device provided elsewhere and connected to the first light level sensor via wires. This is not preferred, however, as trailing wires will appear unsightly to the end user. Thus, the sensing device may comprise a housing containing the components of the sensing device and the attachment means may be adapted to mount the housing to the window glass. In this way, the entire sensing device may be attached simply to the window glass without any trailing wires.

The attachment means may be provided on a surface of the sensing device on which the first light level sensor is also provided. In this case, when the attachment means is applied to the window glass, the first light level sensor receives ambient light from outside the room through the window glass. Thus, the attachment means is applied in this case to the surface of the window glass which faces into the room. This arrangement is preferred because the sensing device will be located within the room, rather than outside the room, which may be outdoors. However, it is possible for the attachment means to be provided on a surface of the sensing device which is opposed to the first light level sensor so that the attachment means is applied to an outer surface of the window glass with respect to the room.

In the presently preferred embodiment the attachment means comprises a self-adhesive region, in particular a self-adhesive ring. However, the attachment means may also comprise a suction cup or any other means capable of attaching the first light level sensor to the window glass.

In order to minimise the power drain on the battery, the wireless transmitter may be configured to transmit light level information from the first light level sensor to the lighting controller only when the light level sensed by the first light level sensor changes. The wireless transmitter may be configured to transmit light level information from the first light level sensor to the lighting controller only when the light level sensed by the first light level sensor changes by a predetermined amount. Thus, the sensing device may comprise a memory, for example as part of a microcontroller, for storing the last light level output of the light level sensor. The sensing device may comprise logic, for example in the form of a microcontroller, for comparing the stored light level with the current light level measured by the first light level sensor in order to determine whether a data transmission is required.

The sensing device may comprise a second light level sensor, wherein the second light level sensor is positioned to sense the ambient light level within the room in the vicinity of the window when the sensing device is attached the window. The second light level sensor may be provided on a surface of the sensing device opposite the surface provided with the first light level sensor. The second light level sensor allows the sensing device to determine that light from within the room is not reaching the window, for example in the case that a blind or curtain has been closed.

The wireless transmitter may be in data communication with the second light level sensor and configured to transmit light level information from the second light level sensor to a lighting controller for a room. The wireless transmitter may be configured to transmit light level information from the second light level sensor to the lighting controller only when the light level sensed by the second light level sensor changes. The wireless transmitter may be configured to transmit light level information from the first light level sensor to the lighting controller only when the light level sensed by the second light level sensor changes by a predetermined amount. Thus, the sensing device may comprise a memory, for example as part of a microcontroller, for storing the last light level output of the second light level sensor. The sensing device may comprise logic, for example in the form of a microcontroller, for comparing the stored light level with the current light level measured by the second light level sensor in order to determine whether a data transmission is required.

The sensing device may comprise a programming interface. The programming interface may be a simple socket to allow electrical connection to the sensing device, in particular to a microcontroller of the sensing device. In the presently preferred embodiment, however, the sensing device comprises an infra-red transceiver (transmitter and receiver) forming a programming interface for the sensing device. In order to minimise the drain on the battery by the infra-red transceiver, a manually-operable activation switch may be provided. The infra-red transceiver may be configured to operate only after the activation switch is operated, for example for a predetermined period of time or until the activation switch is operated again.

The wireless transmitter may comprise a wireless receiver. Thus the wireless transmitter may be a wireless transceiver. The wireless receiver may act as a programming interface for the sensing device.

The invention extends to a lighting control system comprising the sensing device. The lighting control system may comprise a lighting controller. Furthermore, the lighting control system may comprise an additional light level sensor. The additional light level sensor may be configured to measure the ambient light level within the room, for example in the area illuminated by a luminaire under the control of the lighting controller. The lighting controller may be configured to increase the lighting level within the room in the event that the light level measured by the additional light level sensor falls below a predetermined level. Such an increase in the lighting level may be made regardless of the light level information communicated by the sensing device to the lighting controller. In this way, the additional light level sensor provides a failsafe in the event that the lighting level determined by the sensing device does not reflect the true level of illumination due to external light levels. The additional light level sensor may be less accurate than the first (or second) light level sensors when it is only required to operate as a failsafe to prevent an unacceptably low level of illumination.

### BRIEF DESCRIPTION OF THE DRAWINGS

Embodiments of the invention are further described hereinafter, by way of example only, with reference to the accompanying drawings, in which:
Figure 1 is a schematic system diagram of a lux sensor device according to an embodiment of the present invention;
Figure 2 is a front view of the sensor device of Figure 1;
Figure 3 is a rear view of the sensor device of Figures 1 and 2; and
Figure 4 is a schematic diagram showing the location of sensor devices according to an embodiment of the invention in an illuminated space.

### DETAILED DESCRIPTION

An embodiment of the present invention provides a battery-powered wireless light level sensor. The invention overcomes the problems of existing methods of lux measurement to provide accurate and usable lux information for lighting control systems.

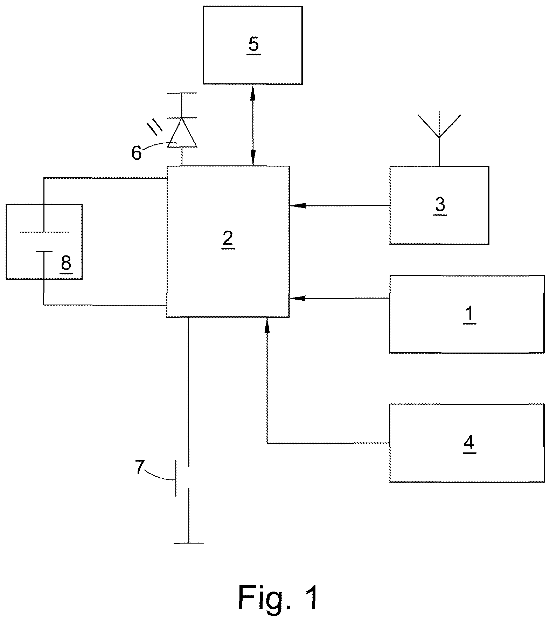

Referring to Figure 1, a sensor device according to an embodiment of the invention comprises an external light level (lux) sensor 1 in the form of a photocell. The external light level sensor 1 is connected to a microcontroller 2. The microcontroller 2 is further connected to a wireless transmitter 3 which is configured for wireless communication with a lighting control system of the space to be illuminated. The microcontroller 2 is further connected an internal light level (lux) sensor 4, also in the form of a photocell. An infra-red transceiver 5 is connected to the microcontroller 2 for programming the microcontroller and a light emitting diode (LED) 6 is provided to give feedback to the user when programming the microcontroller 2. An activation push switch 7 is provided to activate the infra-red transceiver 5 for programming of the microcontroller 2. The entire device is powered by a battery 8 and is provided within a housing.

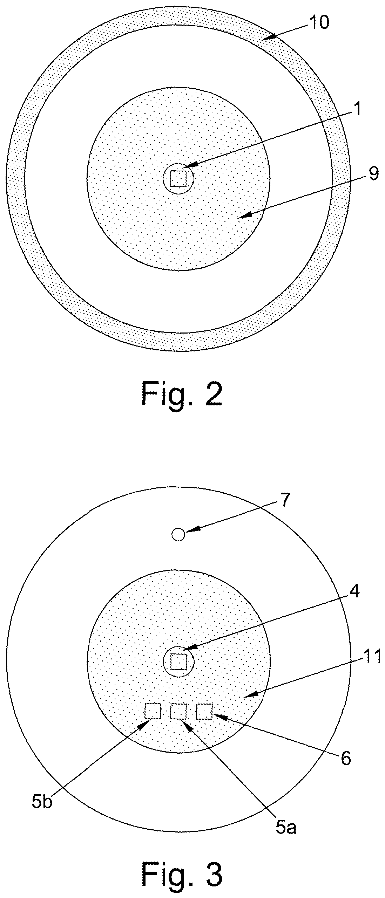

Figure 2 shows a front view of the exterior of the sensor device according to which the external lux sensor 1 is provided with a first lens 9 for focusing light onto the sensor 1. The front exterior of the sensor device is also provided with a self-adhesive ring 10 for adhering the sensor device to the glass of a window with the external lux sensor directed outwardly of the window through the window glass. In this way, the external lux sensor 1 is able to sense the ambient light level outside the window, in order to indicate the level of light entering an illuminated space through the window. A suction cup could be used as an alternative to the self-adhesive ring 10.

Figure 3 shows a rear view of the exterior of the sensor device, i.e. the face of the sensor device which faces away from the window, in use. In Figure 3, the internal lux sensor 4 can be seen and is provided with a second lens 11 for focusing light onto the lux sensor 4. The second lens 11 also covers the LED 6 and the transmitter 5a and receiver 5b of the infra-red transceiver 5. The push switch 7 is provided outside of the area covered by the lens 11.

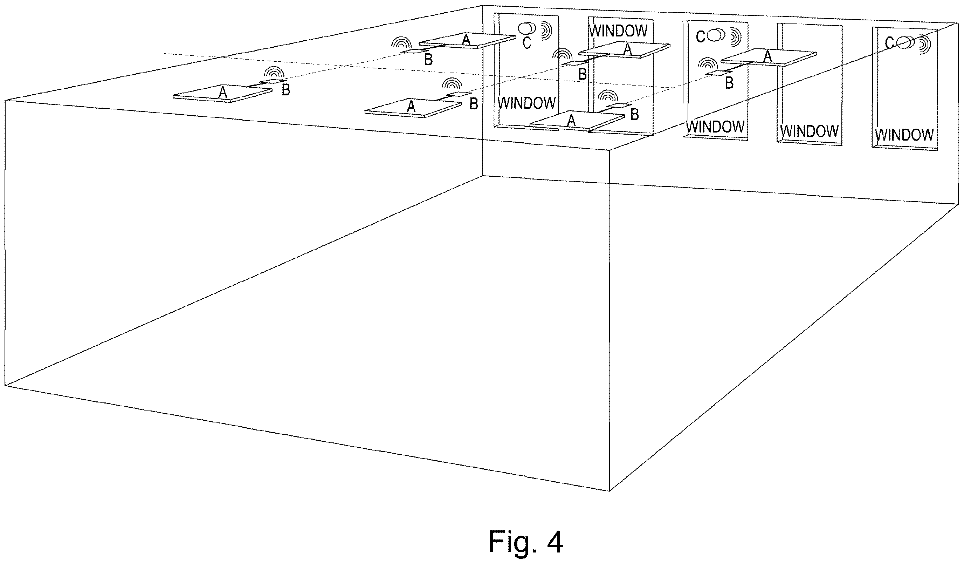

Figure 4 shows a plurality of sensor devices C (in this case three) according to Figures 1 to 3 mounted to the windows of a room to be illuminated. The room is provided with a plurality of lighting luminaires A, each controlled by a respective dimming controller B. It is not necessary for each luminaire A to have a respective controller B, and each controller may control multiple luminaires A. The power connections to the controllers B are shown as dotted lines in Figure 4 and the dimming connections between the controllers B and the luminaires A are shown as solid lines. As indicated in Figure 4, the controllers B are in wireless communication with the window-mounted sensor devices C.

The sensor device C is a battery-powered, wireless-communicating lux level sensing device which can be mounted to the inside of a window, with the external lux sensor 1 sensing directly out of the window. The external lux sensor 1 measures accurately incoming ambient light without any disruptions from the interior of the building. Because the sensor device C is mounted to the glass of the window, it prevents any reflections from the interior lighting affecting the measurement. The internal lux sensor 4 on the rear of the sensor device measures the level of the internal lighting in the illuminated space bounded by the window. This measurement is used to determine if a blind or curtain has been pulled to cover the window, by detecting a sudden change in internal light level. The results of these measurements are wirelessly communicated by the wireless transmitter 3 to an output device or other controller B inside the room to be illuminated. The controller B collates information from one or many sensors devices that may be installed and uses the information to determine the light output for one or many light fittings A installed in the room. In practice, where several sensor devices are employed, the controller B averages dimming levels across an area or provides a peak level.

The sensor device is powered by an internal battery 8 and is capable of wireless communication. This is important so that the sensor device can be mounted in the most effective location without having unsightly wires draped over the window. Taking a lux reading from the lux sensors 1, 4 does not require much electrical power, whereas sending a wireless message takes significantly more power. In order to prolong the battery life, the microcontroller 2 of the sensor device takes lux readings from the external lux sensor 1 and the internal lux sensor 4 on a regular basis, but only sends out a message to the controller B when there has been a significant change in the lux level. If the light level detected by both of the lux sensors 1, 4 is substantially constant within predetermined limits, no messages will be sent by the wireless transmitter 3.

If the controller B were to respond immediately to the received measurements of light level the dimming of the internal lighting could appear noticeably stepped, for example if a message were received by the controller every few minutes. Consequently, a further function of the controller B is to collate the received messages and then generate a smooth curve for the dimming level of the lighting.

In order to operate with multiple sensors devices on a wireless network, and to allow the desired lux level to be set, the sensor devices have an infra-red remote control receiver 5 which is capable of receiving commands from a handheld programming device. As the infra-red receiver 5 uses a relatively large amount of power, it is disabled until the push switch 7 is pressed, at which point the infra-red receiver is activated for a predetermined period of time. The LED 6 flashes when a command has been received to provide the user with feedback.
As the infra-red receiver 5 uses a relatively large amount of power, it is disabled until the push switch 7 is pressed, at which point the infra-red receiver is activated for a predetermined period of time. The LED 6 flashes when a command has been received to provide the user with feedback.

As a failsafe, further light sensors located within the room to be illuminated are connected to the controller. These further sensors allow minimum light levels to be set, whereby if the overall light level in the room falls below the predetermined minimum level according to the further sensors in the room, the controller B ignores the information from the external and internal lux sensors and increases the artificial lighting level to raise the overall lighting level in the room above the predetermined minimum level. This prevents undesirable results when a window has been partially obstructed, for example by a blind being half closed, and the internal light sensor 4 has not registered the change in light level, because it has not been covered.

A photovoltaic cell (not shown) may be provided at the front of the sensor, i.e. the outward-facing side, and used to recharge a rechargeable battery 8. The presence of available ambient light can provide adequate power to recharge the battery during daylight hours, so that in most circumstances the battery will never need changing.
In summary, a battery-powered light level sensing device comprises a light level sensor 1 and a wireless transmitter 3 in data communication with the light level sensor and configured to transmit light level information from the light level sensor 1 to a lighting controller for a room. The sensing device also includes attachment means adapted to attach the sensing device to the glass of a window defining a boundary of the room with the light level sensor positioned to sense the ambient light level outside the room.

## Claims

1. A battery-powered light level sensing device comprising:
a first light level sensor (1);
a wireless transmitter (3) in data communication with the light level sensor and configured to transmit light level information from the first light level sensor to a lighting controller for controlling one or more lighting luminaires for a room; and
a battery compartment for a battery (8) to power the sensor and the wireless transmitter.
**characterised in that** the sensing device further comprises:
attachment means adapted to attach the sensing device to the glass of a window defining a boundary of the room with the first light level sensor positioned such that the first light level sensor is directed outwardly of the window through the window glass, in order that the first light level sensor is adapted to sense the ambient light level outside the room.

2. A sensing device as claimed in claim 1 comprising a housing containing the components of the sensing device, wherein the attachment means is adapted to mount the housing to the window glass.

3. A sensing device as claimed in claim 1 or 2, wherein the attachment means comprises a self-adhesive region.

4. A sensing device as claimed in any preceding claim, wherein the wireless transmitter is configured to transmit light level information from the first light level sensor to the lighting controller only when the light level sensed by the first light level sensor changes.

5. A sensing device as claimed in any preceding claim further comprising a second light level sensor (4), wherein the second light level sensor is positioned to sense the ambient light level within the room in the vicinity of the window when the sensing device is attached the window.

6. A sensing device as claimed in any preceding claim further comprising an infra-red transceiver (5) forming a programming interface for the sensing device and a manually-operable activation switch (7), wherein the infra-red transceiver is configured to operate only after the activation switch is operated.

7. A lighting control system comprising a sensing device as claimed in any preceding claim, and a lighting controller.

8. A lighting control system as claimed in claim 7, further comprising an additional light level sensor, wherein, in use, the additional light level sensor is configured to measure the ambient light level within the room and the lighting controller is configured to increase the lighting level within the room in the event that the light level measured by the additional light level sensor falls below a predetermined level, regardless of the light level information communicated by the sensing device to the lighting controller.

## Patentansprüche

1. Batteriebetriebene Lichtintensitätsmessvorrichtung, umfassend:
einen ersten Lichtintensitätssensor (1);
einen Funksender (3), der sich in Datenkommunikation mit dem Lichtintensitätssensor befindet und so gestaltet ist, dass er Lichtintensitätsinformationen von dem ersten Lichtintensitätssensor zu einer Beleuchtungssteuerung zur Steuerung eines oder mehrerer Leuchtkörper für einen Raum überträgt; und
ein Batteriefach für eine Batterie (8) zur Stromversorgung des Sensors und des Funksenders;
**dadurch gekennzeichnet, dass** die Messvorrichtung ferner folgendes umfasst:
ein Befestigungsmittel, das die Messvorrichtung an dem Glas eines Fensters anbringen kann, das eine Begrenzung des Raums definiert, wobei der erste Lichtintensitätssensor so positioniert ist, dass der erste Lichtintensitätssensor von dem Fenster nach außen durch das Fensterglas gerichtet ist, so dass der erste Lichtintensitätssensor die Umgebungslichtintensität außerhalb des Raums messen kann.

2. Messvorrichtung nach Anspruch 1, wobei diese ein Gehäuse umfasst, welches die Bestandteile der Messvorrichtung enthält, wobei das Befestigungsmittel das Gehäuse an dem Fensterglas anbringen kann.

3. Messvorrichtung nach Anspruch 1 oder 2, wobei das Befestigungsmittel einen selbstklebenden Bereich umfasst.

4. Messvorrichtung nach einem der vorstehenden Ansprüche, wobei der Funksender so gestaltet ist, dass er Lichtintensitätsinformationen von dem ersten Lichtintensitätssensor nur dann zu der Lichtsteuerung überträgt, wenn sich die durch den ersten Lichtintensitätssensor gemessene Lichtintensität ändert.

5. Messvorrichtung nach einem der vorstehenden Ansprüche, wobei diese ferner einen zweiten Lichtintensitätssensor (4) umfasst, wobei der zweite Lichtintensitätssensor so positioniert ist, dass er die Umgebungslichtintensität in dem Raum in der Nähe des Fensters misst, wenn die Messvorrichtung an dem Fenster angebracht ist.

6. Messvorrichtung nach einem der vorstehenden Ansprüche, wobei diese ferner einen Infrarot-Transceiver (5) umfasst, der eine Programmierschnittstelle für die Messvorrichtung bildet, und einen manuell betätigbaren Aktivierungsschalter (7), wobei der Infrarot-Transceiver so gestaltet ist, dass er nur arbeitet nachdem der Aktivierungsschalter betätigt worden ist.

7. Lichtsteuerungssystem, das eine Messvorrichtung nach einem der vorstehenden Ansprüche und eine Beleuchtungssteuerung umfasst.

8. Lichtsteuerungssystem nach Anspruch 7, wobei dieses ferner einen zusätzlichen Lichtintensitätssensor umfasst, wobei der zusätzliche Lichtintensitätssensor im Einsatz so gestaltet ist, dass er die Umgebungslichtintensität in dem Raum misst, und wobei die Lichtsteuerung so gestaltet ist, dass sie die Lichtintensität in dem Raum in dem Fall erhöht, wenn die durch den zusätzlichen Lichtintensitätssensor gemessene Lichtintensität unter einen vorbestimmten Intensitätswert sinkt, unabhängig von den durch die Messvorrichtung an die Lichtsteuerung kommunizierten Lichtintensitätsinformationen.

## Revendications

1. Dispositif de détection de niveau d'éclairement alimenté par pile comprenant :
un premier capteur de niveau d'éclairement (1) ;
un émetteur sans fil (3) en communication de données avec le capteur de niveau d'éclairement et conçu pour transmettre des informations de niveau d'éclairement depuis le premier capteur de niveau d'éclairement vers un dispositif de commande d'éclairage pour commander un ou plusieurs luminaires d'une pièce ; et
un compartiment à pile pour une pile (8) destinée à alimenter le capteur et l'émetteur sans fil,
**caractérisé en ce que** le dispositif de détection comprend en outre :
un moyen de fixation conçu pour fixer le capteur de niveau d'éclairement à la vitre d'une fenêtre définissant une limite de la pièce avec le premier capteur de niveau d'éclairement positionné de sorte que le premier capteur de niveau d'éclairement soit dirigé vers l'extérieur de la fenêtre à travers la vitre de la fenêtre, afin que le premier capteur de niveau d'éclairement soit conçu pour détecter le niveau de lumière ambiante à l'extérieur de la pièce.

2. Dispositif de détection selon la revendication 1, comprenant un boîtier contenant les composants du dispositif de détection, le moyen de fixation étant conçu pour monter le boîtier sur la vitre de la fenêtre.

3. Dispositif de détection selon la revendication 1 ou 2, le moyen de fixation comprenant une région autoadhésive.

4. Dispositif de détection selon l'une quelconque des revendications précédentes, l'émetteur sans fil étant conçu pour transmettre des informations de niveau d'éclairement du premier capteur de niveau d'éclairement au dispositif de commande d'éclairage uniquement lorsque le niveau d'éclairement détecté par le premier capteur de niveau d'éclairement change.

5. Dispositif de détection selon l'une quelconque des revendications précédentes comprenant en outre un second capteur de niveau d'éclairement (4), le second capteur de niveau d'éclairement étant positionné pour détecter le niveau de lumière ambiante dans la pièce à proximité de la fenêtre lorsque le dispositif de détection est fixé à la fenêtre.

6. Dispositif de détection selon l'une quelconque des revendications précédentes, comprenant en outre un émetteur-récepteur infrarouge (5) formant une interface de programmation pour le dispositif de détection et un commutateur d'activation (7) actionnable manuellement, l'émetteur-récepteur infrarouge étant conçu pour fonctionner uniquement après que le commutateur d'activation est actionné.

7. Système de commande d'éclairage comprenant un dispositif de détection selon l'une quelconque des revendications précédentes, et un dispositif de commande d'éclairage.

8. Système de commande d'éclairage selon la revendication 7, comprenant en outre un capteur de niveau d'éclairement supplémentaire, lors de l'utilisation, le capteur de niveau d'éclairement supplémentaire étant conçu pour mesurer le niveau de lumière ambiante à l'intérieur de la pièce et le dispositif de commande d'éclairage étant conçu pour augmenter le niveau d'éclairage à l'intérieur de la pièce dans le cas où le niveau d'éclairement mesuré par le capteur de niveau d'éclairement supplémentaire tombe en dessous d'un niveau prédéfini, indépendamment des informations de niveau d'éclairement transmises par le dispositif de détection au dispositif de commande d'éclairage.
